# EUROPEAN PATENT SPECIFICATION

(11) **EP 2 410 773 B1**
(45) Date of publication and mention of the grant of the patent: **21.09.2016**
(21) Application number: 10753093.3
(22) Date of filing: 07.03.2010
(51) Int. Cl.: H04W 4/02

(54) **METHOD AND APPARATUS FOR RECEIVING AND SENDING MESSAGE**
VERFAHREN UND VORRICHTUNG ZUM EMPFANGEN UND SENDEN VON NACHRICHTEN
PROCÉDÉ ET APPAREIL DE RÉCEPTION ET D'ÉMISSION DE MESSAGE

(30) Priority: 18.03.2009 CN 200910080089
(43) Date of publication of application: 25.01.2012
(73) Proprietor: Huawei Device Co., Ltd., Longgang District Shenzhen Guangdong 518129 (CN)
(72) Inventor: ZHANG, Huiping, Shenzhen Guangdong 518129 (CN); ZHANG, Chuxiong, Shenzhen Guangdong 518129 (CN); LIU, Haitao, Shenzhen Guangdong 518129 (CN)
(74) Representative: Isarpatent
(86) International application number: PCT/CN2010/070898
(87) International publication number: WO 2010/105526

(56) References cited:
- EP-A1- 1 770 884
- WO-A1-2009/046362
- CN-A- 1 949 834
- CN-A- 101 243 702
- CN-A- 101 313 604
- JP-A- 2007 251 477
- US-A1- 2007 086 465

## Description

### FIELD OF THE INVENTION

The present invention relates to the field of communications technologies, and in particular, to a method and a device for receiving and sending information.

### BACKGROUND OF THE INVENTION

The Mobile Broadcast Services (BCAST) is a concept of mobile broadband digital broadcast/multicast services proposed by the Open Mobile Alliance (OMA). For broadcast, the BCAST includes a one-to-many broadcast manner and a multicast manner, and the BCAST considers to connect digital broadcast services on an existing network architecture. The OMA BCAST is dedicated to aspects such as service discovery, electronic program/service guidance, charging, and content protection, formulates a specific service engine, and ensures that the OMA BCAST is independent from a bearing layer.

The OMA standard specifies that a mobile video broadcast service must provide Service Guide (SG) information to a user. The SG information mainly includes brief description of each service and multicast session information corresponding to the service, and specifically, includes a destination multicast Internet Protocol (IP) address, a port number, and a source IP address for specifically transferring program streams. The SG information may also include a session identifier (ID). A terminal may subscribe to certain programs or request to watch certain programs according to relevant information provided in the SG. The SG may be sent to all users registered with a broadcast service provider through broadcast at a network side. Alternatively, a user may actively request a network side to send the SG. The BCAST SG is defined in an Extensible Markup Language (XML) data format and is formed by different data fragments. Each data fragment includes multiple attributes and sub-elements. A relationship among the data fragments is established through reference and association.

The BCAST has a notification function, which has the following notifications according to different ranges: a notification oriented to a user of a whole BSAST system, a notification oriented to a user of a certain service provider, a notification oriented to a user of a certain service, and a notification service. A notification is sent in a form of message, sent through a broadcast channel or to receive a notification message. In the interaction channel, a terminal sends a request to a server where a notification message is located to acquire a relevant notification message. However, no matter which sending manner is adopted, the terminal first needs to know reception information of the notification message, that is, a broadcast session address or a server address. The terminal may acquire the relevant notification message only after access according to the reception information. The reception information of the notification message is generally brought to the terminal through a Service Guide Delivery Descriptor (SGDD) or the SG.

During the implementation of the present invention, the prior art has least has the following problem. For notification function of a broadcast system, there exists an application scenario in which a notification message is only sent to a single area, for example, an emergency evacuation notification message being sent to a certain area or a time-limited discount sale promotion notification message in a shopping mall. Such a notification message only needs to be sent to a terminal within relevant areas and a terminal within other areas in the broadcast network does not need to receive such notification messages. However, a solution to this problem does not exist in the existing mechanism of sending a notification message. A network side may not control a target area of sending a notification message, so that a large number of irrelevant terminals receive a notification message, which thereby increases the loads of a network and a terminal.

Document D1 (US 2007/086465 A1) provides apparatuses and methods for transmitting a notification from a transmitter to a receiver or subscriber station. The notification may inform the user or subscriber of information regarding upcoming events, programs or services, and the like.

Document D2 (EP 1 770 884 A1) provides a terminal appratus for receiving a broadcast service from a broadcasting system. A receiver receives a notification message from the broadcasting system. A message parser parses the notification message according to certain format. A controller determines whether the received notification message is a notification message to be used by a user or by the terminal based on the content of the notification message, and performs an operation according to the determination result.

Document D3 (WO 2009/046362 A1) relates to techniques for sending and receiving broadcast information. Broadcast metadata may be generated for broadcast information and may include location and time criteria used by the terminals to filter the broadcast information.

### SUMMARY OF THE INVENTION

Embodiments of the present invention provide a method and a device for receiving and sending information, which solve the problems in the prior art, such as heavy loads of a network and a terminal due to that a network side may not control a target area of sending a notification message, so as to implement control on the target area of sending the notification message by the network side.

An embodiment of the present invention provides a method for receiving information, where the method includes:
in a process of sending a notification message, receiving, by a terminal, a notification message, the notification message comprises second area information sent by a server, and the second area information is used to instruct a terminal located in a second area to execute an operation corresponding to the notification message; and
determining, by the terminal, whether to execute the operation corresponding to the notification message according to the second area information;
wherein:
the determining, by the terminal, whether to execute the operation corresponding to the notification message according to the second area information comprises: comparing, by the terminal, information of a position where the terminal is located with the second area information; and if the position where the terminal is located is in an area range indicated by the second area information, executing, by the terminal, the operation corresponding to the notification message; and
the notification message further comprises second time information, and the terminal compares the information of the position where the terminal is located with the second area information in time specified by the second time information.
An embodiment of the present invention provides a terminal comprising modules for implementing the above-mentioned method of receving information.

Through the method and the device for receiving and sending the information provided by the embodiments of the present invention, area information is added in reception information of a notification message or in a notification message. The area information indicates an applicable area of the reception information or the notification message, that is, the reception information or the notification message is only applicable to a terminal in the area, so that a network side is capable of controlling a target area of sending a notification message, and a large number of irrelevant terminals are prevented from receiving a notification message, which thereby relieves the loads of a network and a terminal.

### BRIEF DESCRIPTION OF THE DRAWINGS

FIG. 1 is a flow chart of a method for sending reception information according to Embodiment 1 of the present invention;
FIG. 2 is a flow chart of a method for receiving reception information according to Embodiment 1 of the present invention;
FIG. 3 is a flow chart of a method for sending a notification message according to Embodiment 1 of the present invention;
FIG. 4 is a flow chart of a method for receiving a notification message according to Embodiment 1 of the present invention;
FIG. 5 is a flow chart of a method for sending reception information and a notification message according to Embodiment 1 of the present invention;
FIG. 6 is a flow chart of a method for receiving reception information and a notification message according to Embodiment 1 of the present invention;
FIG. 7 is a schematic structural diagram of a server according to Embodiment 1 of the present invention;
FIG. 8 is a schematic structural diagram of a server according to Embodiment 2 of the present invention;
FIG. 9 is a schematic structural diagram of a terminal according to Embodiment 1 of the present invention;
FIG. 10 is a schematic structural diagram of a terminal according to Embodiment 2 of the present invention;
FIG. 11 is a schematic composition diagram of a network system according to Embodiment 1 of the present invention;
FIG. 12 is a schematic structural diagram of a server according to Embodiment 3 of the present invention;
FIG. 13 is a schematic structural diagram of a terminal according to Embodiment 3 of the present invention; and
FIG. 14 is a schematic composition diagram of a network system according to Embodiment 2 of the present invention.

### DETAILED DESCRIPTION OF THE EMBODIMENTS

The technical solutions of embodiments of the present invention are further illustrated in the following with reference to the accompanying drawings and specific embodiments. In a BCAST system, a server sends a notification message to a terminal. The reception information of the notification message is provided by an SGDD or an SG. The reception information may be a broadcast session address and a server address. The terminal may acquire a relevant notification message only after access according to the reception information. In the prior art, a notification function does not have area correlation and a network side may not control a target area of the notification message, so that a large number of irrelevant users receive the notification message, which thereby increases the loads of a network and a terminal. The embodiments of the present invention provide a solution to the above disadvantages. From a viewpoint of a discovery mechanism, the reception information of the notification message does not include area information, and a user may not know from the reception information to which areas the relevant notification message is applicable, so the area information may be added in the reception information of the notification message, so that a network side may control the target area of the notification message. From a viewpoint of processing performed after the terminal receives the notification message, the terminal may not distinguish applicability of the notification message in different areas when parsing the notification message, so the area information may also be added in the notification message, so that the notification message is applicable to a terminal within the area and inapplicable to a terminal outside the area. The embodiments of the present invention solve a problem of an area division function of a notification message, so that a broadcast service system implements a notification oriented to a target area.

A BCAST notification function includes the following notifications according to different ranges.

The first notification is a notification oriented to a user of a whole BCAST system. All users in the BCAST system may receive the notification no matter which service the user subscribes to or no matter which service provider the service belongs to. The notification is, for example, an emergency message or a notification related to a BCAST system problem.

The second notification is a notification oriented to a user of a certain service provider, such as a service operation problem announcement.

The third notification is a notification oriented to a user of a certain service, for example, information (such as service program interruption, a service program schedule, or access point change) about availability of a certain service, program-related information (such as news and a game score message) provided to improve service experience, service information in an adjacent system or a message supporting roaming, a download or update notification of a common file such as a film, music or software, triggering of downloading or inserting auxiliary data related to a service or content, or other information related to a service or content.

The fourth notification is a notification service. The notification is used as a separate service. Only a user subscribing to the notification service may receive a relevant notification message.

A discovery mechanism varies for different notification messages.

For a notification message oriented to a user in a whole BCAST system, the reception information is provided by an E1 element "NotificationReception" of an SGDD. A format of the "NotificationReception" element is described in Table 1. In the following data definition, E represents an element, A represents an attribute, E1 represents a sub-element, E2 represents a sub-element of the sub-element, and so forth. NM indicates that a network must give support. NO indicates that the network optionally gives support. TM indicates that a terminal must give support. TO indicates that the terminal optionally gives support.

**Table 1**

| Element Name | Type | Mandatory or Not | Occurrence Number | Description | Data Type |
|---|---|---|---|---|---|
| NotificationReception | E1 | NO/TO | 0..1 | Reception information of a notification message, including the following elements: IPBroadcastDelivery (IP multicast address) | |
| | | | | PollURL (a URL address used when a terminal acquires the notification message through an interaction channel, in which URL is short for Uniform Resource Locator) PollPeriod (a query period) | |
| IPBroadcastDelivery | E2 | NM/TM | 0..1 | Multicast address and port number required to receive a notification message on a broadcast channel, including the following attributes: | |
| | | | | Port (port) | |
| | | | | Address (address) | |
| port | A | NM/TM | 1 | Port for delivering a notification message | unsignedInt |
| address | A | NM/TM | 1 | IP multicast address for delivering a notification message | string |
| PollURL | E2 | NM/TM | 0..N | URL address used when a terminal acquires a notification message through an interaction channel | anyURI |
| PollPeriod | E2 | NO/TM | 0..1 | Query period for a terminal to send a query request | decimal |

Here, "IPBroadcastDelivery" indicates an IP multicast address and a port number for delivering a notification message, and "PollURL" indicates a URL address for a terminal to acquire the notification message through an interaction channel. If the notification message is sent through a broadcast channel, the E1 element "NotificationReception" of an SGDD carries an "IPBroadcastDelivery" sub-element. If the notification message is sent through the interaction channel, the E1 element "NotificationReception" of the SGDD carries a "PollURL" sub-element. After receiving the SGDD, the terminal accesses the session according to the reception information and acquires the notification message.

For a notification message oriented to a user of a certain service provider, the reception information is provided by a sub-element E3 "NotificationReception" of an E2 element "BSMSelctor" of the SGDD, as specifically described in Table 2.

**Table 2**

| Element Name | Type | Mandatory or Not | Occurrence Number | Description | Data Type |
|---|---|---|---|---|---|
| BSMList | E1 | NM/TM | 0..1 | BSM Selector information. A BSM is responsible for managing a BCAST service subscription relation, and different operators have different BSMs. | |
| | | | | Contains the following element: BSMSelector | |
| BSMSelector | E2 | NM/TM | 1..N | BSM information corresponding to each fragment in an SGDU described in this SGDD | |
| (For the sake of simplification, other elements unrelated to the embodiment of the present invention are omitted.) | | | | | |
| NotificationReception | E3 | NO/TM | 0..1 | Reception information of a notification message | |
| IPBroadcastDelivery | E4 | NM/TM | 0..1 | Multicast address and port number required to receive a notification message on a broadcast channel | |
| port | A | NM/TM | 1 | Port for delivering a notification message | unsignedInt |
| address | A | NM/TM | 1 | IP multicast address for delivering a notification message | string |
| PollURL | E4 | NM/TM | 0..N | URL address used when a terminal acquires a notification message through an interaction channel | anyURI |
| PollPeriod | E4 | NO/TM | 0..1 | Query period for a terminal to send a query request | decimal |

"NotificationReception" indicates reception information of a notification related to a parent "BSMSelctor". Only a terminal user of a service provider indicated by the "BSMSeletor" may receive the relevant notification message.

For a notification message oriented to a certain service user, the reception information is provided by an E1 element "NotificationReception" of an "Access" fragment corresponding to the service. After a terminal subscribes to or selects a service program, if an "Access" fragment indicating access information of the service includes the reception information "NotificationReception" of the notification message, the terminal accesses the session according to the reception information and acquires the notification message.

For a notification service, a notification message is used as a separate service. A "service" fragment in an SG describes service information. "AccessType" in the "Access" fragment associated with the "service" fragment describes the reception information of the notification message, as specifically described in Table 3.

**Table 3**

| Element Name | Type | Mandatory or Not | Occurrence Number | Description | Data Type |
|---|---|---|---|---|---|
| AccessType | E1 | NM/TM | 1 | This element defines an access mode and includes the following elements: | |
| | | | | BroadcastServiceDelivery (broadcast channel IP delivery indication) | |
| | | | | UnicastServiceDelivery (indicating which server and/or protocol is used to deliver a service on an interaction channel) | |
| BroadcastServiceDelivery | E2 | NM/TM | 0..1 | Broadcast channel IP delivery indication, includes the following elements: | |
| | | | | BDSType (a type of an access network) | |
| | | | | SessionDescription (session description information used for service access) | |
| | | | | FileDescription (file description information used for a file transmission session) | |

| (For the sake of simplification, other elements unrelated to the embodiment of the present invention are omitted.) | | | | | |
|---|---|---|---|---|---|
| UnicastServiceDelivery | E2 | NM/TM | 0..N | This element indicates which server and/or protocol is used to deliver a service on an interaction channel and includes the following elements: | |
| | | | | AccessServerURL (A terminal acquires a server URL of a service through an interaction network.) | |
| | | | | SessionDescription (session description information of an access service) | |
| (For the sake of simplification, other elements unrelated to the embodiment of the present invention are omitted.) | | | | | |

A terminal subscribing to the service receives a relevant notification message according to access information provided in an "Access" fragment. If the "Access" fragment provides broadcast channel access information "BroadcastServiceDelivery", the terminal receives the notification message by accessing a broadcast session. If the "Access" fragment provides interaction channel access information "UnicastServiceDeliver"y, the terminal sends a request for acquiring the notification message to a server.

The embodiment of the present invention implements the area division function in the following three manners, which are described respectively as follows.

The first manner is as follows. A server adds area information in reception information of a notification message to indicate an applicable area of the reception information, that is, an applicable range of the notification message. Only a terminal in the applicable area needs to receive a relevant notification message.

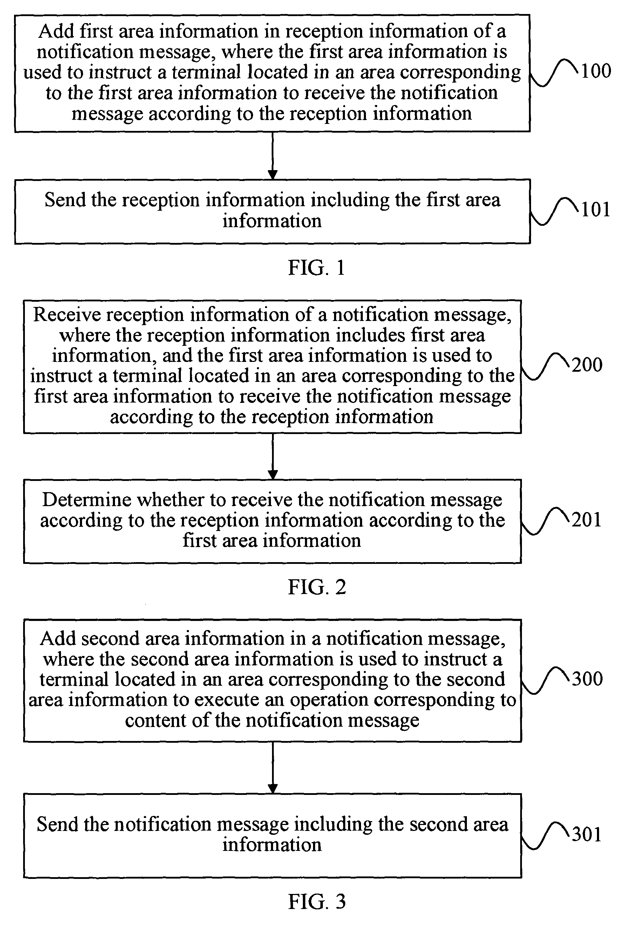

FIG. 1 is a flow chart of a method for sending reception information according to Embodiment 1 of the present invention. As shown in FIG. 1, the method includes the following steps.

Step 100: Add first area information in reception information of a notification message, where the first area information is used to instruct a terminal located in a first area to receive the notification message according to the reception information.

Before sending the notification message to the terminal, a server sends the reception information of the notification message to the terminal through an SGDD or an SG, so that the terminal may access a session according to the reception information to acquire the relevant notification message. In order to implement an area division function of the notification message, in this embodiment, the first area information is added in the reception information of the notification message, so as to indicate, for the terminal receiving the reception information, that the notification message is only applicable to a terminal located in the first area, that is to say, the notification message is sent to the terminal in a specific area, and a terminal not located in the area may not receive the notification message. Therefore, the first area information is added in the reception information of the notification message, so that the area division function of the notification message may be implemented.

Step 101: Send the reception information including the first area information.

After adding the first area information in the reception information, the server sends the reception information including the first area information to all terminals through, for example, the SGDD or the SG. The terminal may determine whether the notification message corresponding to the reception information is applicable to the terminal itself according to the first area information.

Through the method for sending the reception information provided in this embodiment, the area information is added in the reception information of the notification message. The area information indicates an applicable area of the notification message. Only a terminal in the applicable area needs to receive a relevant notification message, so that a network side is capable of controlling a range of sending the notification message, which thereby relieves the loads of a network and a terminal.

FIG. 2 is a flow chart of a method for receiving reception information according to Embodiment 1 of the present invention. As shown in FIG. 2, this embodiment is directed to a process as shown in FIG. 1 and provides a processing process after a terminal receives reception information including area information. The method is specifically as follows.

Step 200: Receive reception information of a notification message, where the reception information includes first area information, and the first area information is used to instruct a terminal located in an area corresponding to the first area information to receive the notification message according to the reception information.

In order to implement the area division function of the notification message, a server adds the first area information in reception information of the notification message to instruct a terminal located in a first area to receive the notification message according to the reception information. The terminal acquires the reception information of the notification message through, for example, an SGDD or an "Access" fragment and parses the reception information to obtain the first area information included in the reception information.

Step 201: Determine whether to receive the notification message according to the reception information according to the first area information.

After obtaining the first area information, the terminal compares information of a position where the terminal is located with the first area information. If the position where the terminal is located is in an area range indicated by the first area information, the terminal needs to receive a corresponding notification message according to the reception information. The reception information includes a reception parameter required to receive the notification message. If the notification message is delivered through a broadcast channel, the reception information includes an IP multicast address and a port number required to receive the notification message. The terminal accesses a broadcast session according to the information to receive the notification message. If the notification message is delivered through an interaction channel, the reception information includes address information, generally a server URL, required to acquire the notification message. The terminal sends a request to the URL to acquire the notification message.

If the position where the terminal is located is not in the area range indicated by the first area information, the terminal does not need to receive the notification message, and then the terminal quits the process. Specifically, after receiving the reception information of the notification message including the area information, the terminal needs to compare a terminal position with the area information, so as to know whether the terminal is in a target area where the notification message needs to be received. For position filtering having a low positioning accuracy requirement, the terminal position may be determined through a cell-id. For position filtering having a high positioning accuracy requirement or a specific format requirement, a dedicated positioning system needs to be used to acquire terminal position information. For example, the terminal position information is acquired through positioning by using a Global Position System (GPS). Alternatively, the terminal position information is acquired by following a relevant positioning specification such as the 3rd Generation Partnership Project (3GPP), the 3rd Generation Partnership Project 2 (3GPP2) or the OMA SUPL. Alternatively, the position information is acquired by following position information of some private standards. The terminal may acquire the information of the position where the terminal is located through the prior art.

Through the method for receiving the notification message provided in this embodiment, before receiving the notification message, a terminal may determine whether to receive a relevant notification message according to target area information of the notification message carried in reception information, which thereby avoids irrelevant processes, relieves the load of a terminal, and save network resource.

A second manner is that the server adds the area information in the notification message, and after receiving the notification message, the terminal decides whether the notification message is applicable according to a matching result between the terminal position and the target area.

FIG. 3 is a flow chart of a method for sending notification message according to Embodiment 1 of the present invention. As shown in FIG. 3, the method includes the following steps.

Step 300: Add second area information in a notification message, where the second area information is used to instruct a terminal located in an area corresponding to the second area information to execute an operation corresponding to the notification message.

A difference between the method provided in this embodiment and the method for sending the reception information in the embodiment lies in that a server does not add the area information in the reception information, but instead, directly adds the area information in the notification message. After receiving the notification message, the terminal decides whether the notification message is applicable according to a matching result between the terminal position and the target area corresponding to the area information, so as to implement the area division function of the notification message.

Step 301: Send the notification message including the second area information.

Before sending the notification message, the server adds the second area information in the notification message, where the second area information is used to instruct the terminal located in an area corresponding to the second area information to execute an operation corresponding to the notification message. After the notification message including the area information is generated, the notification message is sent to the terminal through a broadcast channel or an interaction channel. The terminal may determine whether the notification message is applicable to the terminal itself according to the instruction of the second area information and decide whether to execute the operation described in the notification message.

Through the method for sending the reception information provided in this embodiment, the area information is added in the notification message, where the area information indicates an applicable area of the notification message, that is, the notification message is only applicable to a terminal in the area, so that a network side is capable of controlling a range of sending the notification message, which thereby relieves the loads of a network and a terminal.

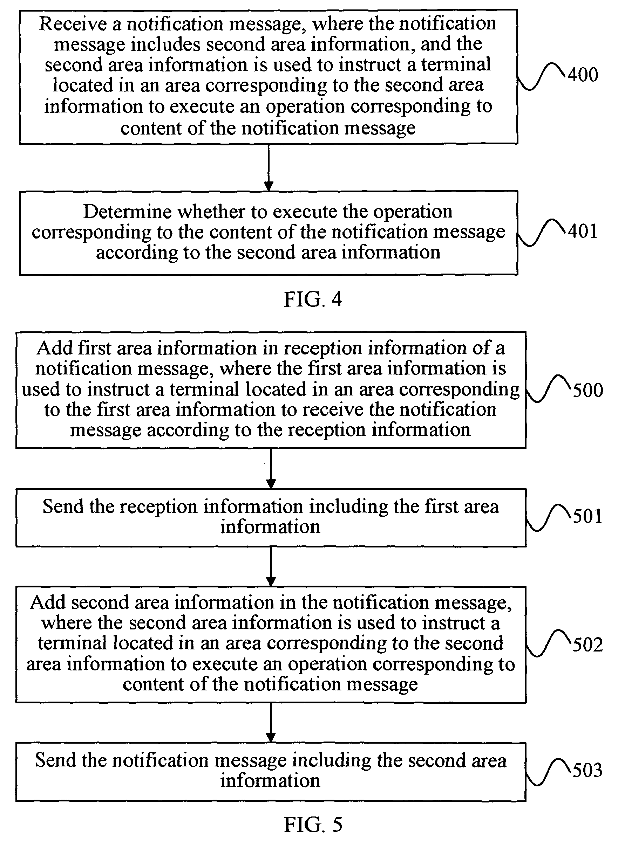

FIG. 4 is a flow chart of a method for receiving a notification message according to Embodiment 1 of the present invention. As shown in FIG. 4, this embodiment is directed to a process shown in FIG. 3 and provides a processing process performed after a terminal receives the notification message including area information. The method is specifically as follows.

Step 400: Receive a notification message, where the notification message includes second area information, and the second area information is used to instruct a terminal located in an area corresponding to the second area information to execute an operation corresponding to the notification message.

The terminal performs initialization and then acquires reception information of the notification message through an SGDD or an "Access" fragment. The terminal receives the notification message through a broadcast channel or an interaction channel according to the instruction of the reception information. In order to implement an area division function of the notification message, a server adds the second area information in the notification message to instruct a terminal located in second area to decide whether a relevant notification message is applicable according to the second area information.

Step 401: Determine whether to execute an operation corresponding to the notification message according to the second area information.

After obtaining the notification message, the terminal first obtains information of a position where the terminal is located, and compares the information of the position where the terminal is located with the second area information, so as to know whether the terminal is in a target area corresponding to the second area information. If the position where the terminal is located is not in an area range indicated by the second area information, the received notification message is considered to be inapplicable, and the terminal does not execute the operation corresponding to the notification message. If the position where the terminal is located is in the area range indicated by the second area information, the notification message received by the terminal is considered to be applicable, and the terminal executes the operation corresponding to the content according to the notification message. When the terminal performs position information comparison, for position filtering having a low positioning accuracy requirement, the terminal position may be determined through a cell ID, and for position filtering having a high positioning accuracy requirement or a specific format requirement, a dedicated positioning system needs to be used to acquire terminal position information. For example, the terminal position information is acquired through positioning by using a GPS. Alternatively, the terminal position information is acquired following a relevant positioning specification such as the 3GPP, the 3GPP2, or the OMA SUPL. Alternatively, the position information is acquired following some private standards. The terminal may acquire the information of the position where the terminal is located through the prior art.

In a BCAST notification message, different values of an "eventType" field indicate different uses of the notification message. For example, if eventType = 1, it indicates that an emergency message is to be sent to a user. If eventType = 2, it indicates that the terminal is informed of downloading/updating an SGDD or an SG fragment. If eventType = 3, it indicates that the terminal is instructed to download/update a relevant file. If eventType = 4, it indicates that the terminal is informed of a certain program to be played; if eventType = 8, it indicates that the terminal is to be triggered to acquire a DM data packet. Therefore, the operation corresponding to the notification message may be parsing content of the notification message and display the content in a screen of the terminal, or performing downloading/updating operation on a corresponding service platform according to an SGDD or an SG downloading/updating information, or downloading/updating a relevant file, or informing the user that the program is interrupted accidentally, or triggering the terminal to acquire the DM data packet.

Through the method for receiving the notification message provided in this embodiment, after receiving the notification message, the terminal may determine whether the notification message is valid according to the second area information carried in the notification message, which thereby avoids irrelevant processes, relieves the load of a terminal, and saves network resources.

A third manner is a combination of the foregoing two manners. The server adds the first area information in the reception information of the notification message, and adds the second area information in the notification message, where the second area information is a subset of the first area information. In a reception area, different notification messages carry different area information to further subdivide an effective area of the notification message.

FIG. 5 is a flow chart of a method for sending reception information and a notification message according to Embodiment 1 of the present invention. As shown in FIG. 5, the method includes the following steps.

Step 500: Add first area information in reception information of a notification message, where the first area information is used to instruct a terminal located in an area corresponding to the first area information to receive the notification message according to the reception information.

Before sending the notification message to the terminal, a server sends the reception information of the notification message to the terminal through an SGDD or an SG, so that the terminal may access a session according to the reception information to acquire a relevant notification message. In order to implement an area division function of the notification message, in this embodiment, the first area information is added in the reception information of the notification message, so as to indicate, for the terminal receiving the reception information, that the notification message is only applicable to a terminal located in the first area, that is to say, the notification message is sent to a terminal in a specific area, and a terminal not located in the area may not receive the notification message. Therefore, the first area information aims to instruct the terminal located in the first area to receive the notification message according to the reception information, so as to implement the area division function of the notification message.

Step 501: Send the reception information including the first area information.

After adding the first area information in the reception information, the server sends the reception information including the first area information to all terminals through the SGDD or the SG. The terminal may determine whether the notification message corresponding to the reception information is applicable to the terminal itself according to the instruction of the first area information.

Step 502: Add second area information in the notification message, where the second area information is used to instruct a terminal located in the second area to execute an operation corresponding to the notification message.

The server adds the second area information in the notification message. A target area range corresponding to the second area information is generally not greater than a target area range corresponding to the first area information added in the reception information. Before sending the notification message, the server adds the second area information in the notification message, where the second area information is used to instruct a terminal located in a second area to execute the operation corresponding to the notification message. After the notification message including the area information is generated, the notification message is sent to the terminal. The terminal may determine whether the notification message corresponding to the reception information is applicable to the terminal itself according to the instruction of the second area information and further decide whether to execute the operation described in the notification message.

Step 503: Send the notification message including the second area information.

The server sends the notification message through a broadcast channel or an interaction channel.

In the method provided in this embodiment, filtering mechanisms provided in the foregoing embodiments are combined, that is, the reception information of the notification message and the notification message carry area information respectively, so that different areas where the notification message is sent is further divided, and a network side is capable of controlling a range of sending the notification message, thereby relieving the loads of a network and a terminal.

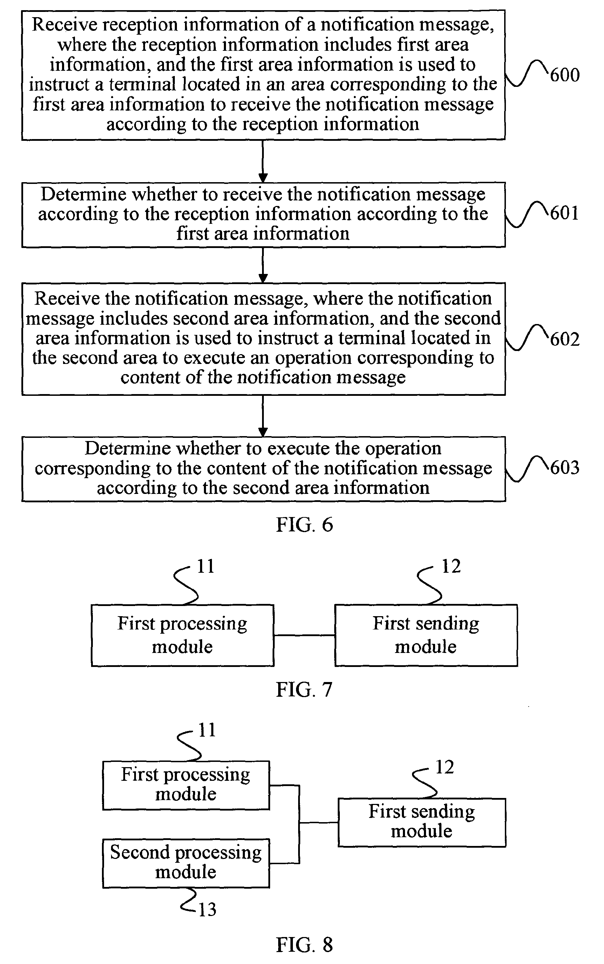

FIG. 6 is a flow chart of a method for receiving reception information and a notification message according to Embodiment 1 of the present invention. As shown in FIG. 6, this embodiment is directed to a process shown in FIG. 5 and provides a processing process after a terminal receives the reception information and the notification message including area information respectively. The method is specifically as follows.

Step 600: Receive reception information of a notification message, where the reception information includes first area information, and the first area information is used to instruct a terminal located in an area corresponding to the first area information to receive the notification message according to the reception information.

In order to implement the area division function of the notification message, a server adds the first area information in reception information of the notification message to instruct a terminal located in a first area to receive the notification message according to the reception information. The terminal acquires the reception information of the notification message through an SGDD or an "Access" fragment in an SG and then parses the reception information to obtain the first area information included in the reception information.

Step 601: Determine whether to receive the notification message according to the reception information according to the first area information.

After obtaining the first area information, the terminal compares information of a position where the terminal is located with the first area information. If the position where the terminal is located is in an area range indicated by the first area information, the terminal needs to receive a corresponding notification message according to the reception information, that is, step 602 is executed. The reception information includes a reception parameter required to receive the notification message. If the notification message is delivered through a broadcast channel, the reception information includes an IP multicast address and a port number required to receive the notification message. The terminal accesses a broadcast session according to the instruction of the information to receive the notification message. If the notification message is delivered through an interaction channel, the reception information includes address information, generally a server URL, required to acquire the notification message. The terminal sends a request to the URL to acquire the notification message.

If the position where the terminal is located is not in the area range indicated by the first area information, the terminal does not need to receive the notification message, and then the process ends. Specifically, after receiving the reception information of the notification message including the area information, the terminal needs to compare a terminal position with the area information, so as to know whether the terminal is in a target area where the notification message needs to be received.

Step 602: Receive the notification message, where the notification message includes second area information, and the second area information is used to instruct a terminal located in a second area to execute an operation corresponding to the notification message.

The terminal in a target area corresponding to the first area information receives the notification message according to the instruction of the reception information. In order to implement a further area division function of the notification message, the server adds the second area information in the notification message to instruct the terminal located in the second area to decide whether the relevant notification message is applicable to the terminal itself according to the second area information.

Step 603: Determine whether to execute an operation corresponding to the notification message according to the second area information.

After obtaining the notification message, the terminal first obtains information of a position where the terminal is located, and compares the information of the position where the terminal is located with the second area information, so as to know whether the terminal is in a target area corresponding to the second area information. If the position where the terminal is located is not in an area range indicated by the second area information, the received notification message is considered to be inapplicable, and the terminal does not execute the operation corresponding to the notification message. If the position where the terminal is located is in the area range indicated by the second area information, the notification message received by the terminal is considered to be applicable, and the terminal executes the operation corresponding to the content according to the notification message. When the terminal performs position information comparison, for position filtering having a low positioning accuracy requirement, the terminal position may be determined through a cell-id, and for position filtering having a high positioning accuracy requirement or a specific format requirement, a dedicated positioning system needs to be used to acquire terminal position information. For example, the terminal position information is acquired through positioning by using a GPS. Alternatively, the terminal position information is acquired following a relevant positioning specification such as the 3GPP, the 3GPP2, or the OMA SUPL. Alternatively, the position information is acquired following some private standards. The terminal may acquire the information of the position where the terminal is located through the prior art.

Through the method for receiving the notification message provided in this embodiment, the terminal performs area filtering twice through the area information in the reception information and the notification message, which thereby avoids irrelevant processes, relieves the load of a terminal, and saves network resources.

In the method for sending the reception information, the method for sending the notification message, and the method for receiving the notification message, formats of the area information added in the reception information or the notification message may be the same. The area information may be represented by adopting various parameters or forms, such as position information (such as an area shape, a country number, an area name) in a format of the OMA Mobile Location Protocol (MLP), position information (such as a cell-id or a zip code in a system such as the 3GPP, the 3GPP2, or the Digital Video Broadcasting-Handheld (DVB-H)) in a format of a cell-id of a distribution system, or position information (such as longitude and latitude and a precision range) in a format of a GPS system. The parameters may be combined through a specific logic relationship to form more complicated area representation. Table 4 describes an example of a format of the area information.

**Table 4**

| Element Name | Type | Mandatory or Not | Occurrence Number | Description | Data Type |
|---|---|---|---|---|---|
| BroadcastArea | E1 | NO/TO | 0..1 | This element indicates a broadcast area of a notification message. | |
| polarity | A | NO/TO | 0..1 | This element indicates a relationship between a notification message and a target area. | boolean |
| | | | | If polarity = true (default value), it indicates that a relevant area may receive the notification message. | |
| | | | | If polarity = false, it indicates that a relevant area may not receive the notification message. | |
| TargetArea | E2 | NO/TM | 0..N | This element specifies target area information, and area information may include the following forms: | |
| | | | | shape | |
| | | | | cc | |
| | | | | name_area | |
| | | | | ZipCode | |
| | | | | CellTargetArea | |
| shape | E3 | NO/TM | 0..1 | Geographic area, a specific format of which is specified by the OMA MLP specification | |
| cc | E3 | NO/TM | 0..1 | Country code, consisting of 1 digit to 3 digits, a specific format of which is specified by the OMA MLP specification | unsignedShort |
| Name_area | E3 | NO/TM | 0..N | Geographic area name, for example, Seoul, a specific format of which is specified by the OMA MLP specification | string |
| ZipCode | E3 | NO/TM | 0..1 | Zip code | string |
| CellTargetArea | E3 | NO/TM | 0..1 | Cell area information | |
| type | A | NM/TM | 1 | Type of cell area information Allowed values are: | unsignedByte |
| | | | | 0: reserved | |
| | | | | 1: 3GPP Cell Global ID, defined in the 3GPP TS 23.003 | |
| | | | | 2: 3GPP Routing Area Identifier (RAI), defined in the 3GPP TS 23.003 | |
| | | | | 3: 3GPP Location Area Identifier (LAI), defined in the 3GPP TS 23.003 | |
| | | | | 4: 3GPP Service Area Identifier (SAI), defined in the 3GPP TS 23.003 | |
| | | | | 5: 3GPP MBMS Service Area Identity (MBMS SAI), defined in the 3GPP TS 23.003 | |
| | | | | 6: 3GPP2 Subnet ID, defined in the 3GPP2 C.S0054-0 | |
| | | | | 7: 3GPP2 SID, defined in the 3GPP2 C.S0005-D | |
| | | | | 8: 3GPP2 SID+NID, defined in the 3GPP2 C.S0005-D | |
| | | | | 9: 3GPP2 SID+NID+PZID, defined in the 3GPP2 C.S0005-D | |
| | | | | 10: 3GPP2 SID+PZID, defined in the 3GPP2 C.S0005-D | |
| | | | | 11: DVB-H Cell ID, defined in the BCAST 10-DVBH-IPDC-Adaptation | |
| | | | | 10-127: reserved | |
| | | | | 128-255: private extension | |
| CellArea | E4 | NO/TM | 0..N | Specific cell area information, a type of which is determined by a Type attribute | |
| value | A | NM/TM | 1 | Cell ID | unsignedShort |
| PP2CellID | E5 | NO/TO | 0..N | If type = 4, this element represents a value of Sector_ID, where Sector_ID is defined in the 3GPP2 C.S0024-A. | positiveInteger |
| | | | | If type = 5, 6, 7, or 8, this element represents a value of BASE ID, where BASE ID is defined in the 3GPP2 C.S0002-0. | |
| Hor_acc | E2 | NO/TM | 0..N | Precision in meters on a horizontal plane, specific content of which is defined in the OMA MLP | string |

When the reception information of the notification message is represented by a "NotificationReception" element in the SGDD or the "Access" fragment, the area information may be added in the reception information of the notification message as a sub-element of "NotificationReception". An example of a data format of the area information is described in Table 5.

**Table 5**

| Element Name | Typ e | Mandatory or Not | Occurrence Number | Description | Data Type |
|---|---|---|---|---|---|
| NotificationRe ception | E1 | NO/TO | 0..1 | Reception information of a notification message, including the following elements: | NotificationRe ception |
| | | | | IPBroadcastDelivery | |
| | | | | PollURL | |
| | | | | PollPeriod | |
| | | | | BroadcastArea | |
| IPBroadcastDe livery | E2 | NM/TM | 0..1 | An IP multicast address and a port number required to receive a notification message through a broadcast channel | |
| port | A | NM/TM | 1 | Port number | unsignedInt |
| address | A | NM/TM | 1 | IP multicast address | string |
| PollURL | E2 | NM/TM | 0..N | A URL for a terminal to acquire a notification message through an interaction channel | anyURI |
| PollPeriod | E2 | NO/TM | 0..1 | Request period used when a terminal acquires a notification message through an interaction channelUnit: second | decimal |
| BroadcastArea | E2 | NO/TO | 0..1 | This element indicates a broadcast area of a notification message. | |
| polarity | A | NO/TO | 0..1 | This element indicates a relationship between a notification message and a target area. | boolean |
| | | | | If polarity = true (default value), it indicates that a relevant area may receive the notification message. | |
| | | | | If polarity = false, it indicates that a relevant area may not receive the notification message. | |
| TargetArea | E3 | NO/TM | 0..N | This element specifies target area information, and area information may include the following forms: shape | |
| | | | | cc | |
| | | | | name_area | |
| | | | | ZipCode | |
| | | | | CellTargetArea | |
| shape | E4 | NO/TM | 0..1 | Geographic area, a specific format of which is specified by the OMA MLP specification | |
| cc | E4 | NO/TM | 0..1 | Country code, consisting of 1 digit to 3 digits, a specific format of which is specified by the OMA MLP specification | unsignedShort |
| name_area | E4 | NO/TM | 0..N | Geographic area name, for example, Seoul, a specific format of which is specified by the OMA MLP specification | string |
| ZipCode | E4 | NO/TM | 0..1 | Zip code | string |
| CellTargetAre a | E4 | NO/TM | 0..1 | Cell area information | |
| type | A | NM/TM | 1 | Type of cell area information Allowed values are: | unsignedByte |
| | | | | 0: reserved | |
| | | | | 1: 3GPP Cell Global ID, defined in the 3GPP TS 23.003 | |
| | | | | 2: 3GPP Routing Area Identifier (RAI), defined in the 3GPP TS 23.003 | |
| | | | | 3: 3GPP Location Area Identifier (LAI), defined in the 3GPP TS 23.003 | |
| | | | | 4: 3GPP Service Area Identifier (SAI), defined in the 3GPP TS 23.003 | |
| | | | | 5: 3GPP MBMS Service Area Identity (MBMS SAI), defined in the 3GPP TS 23.003 | |
| | | | | 6: 3GPP2 Subnet ID, defined in the 3GPP2 C.S0054-0 | |
| | | | | 7: 3GPP2 SID, defined in the 3GPP2 C.S0005-D | |
| | | | | 8: 3GPP2 SID+NID, defined in the 3GPP2 C.S0005-D | |
| | | | | 9: 3GPP2 SID+NID+PZID, defined in the 3GPP2 C.S0005-D | |
| | | | | 10: 3GPP2 SID+PZID, defined in the | |
| | | | | 3GPP2 C.S0005-D | |
| | | | | 11: DVB-H Cell ID, defined in the BCAST10-DVBH-IPDC-Adaptation | |
| | | | | 10-127: reserved | |
| | | | | 128-255: private extension | |
| CellArea | E5 | NO/TM | 0..N | Specific cell area information, a type of which is determined by a Type attribute | |
| value | A | NM/TM | 1 | Cell ID | unsignedShort |
| PP2CellID | E6 | NO/TO | 0..N | If type = 4, this element represents a value of Sector_ID, where Sector_ID is defined in the 3GPP2 C.S0024-A. | positiveIntege r |
| | | | | If type = 5, 6, 7, or 8, this element represents a value of BASE ID, where BASE ID is defined in the 3GPP2 C.S0002-0. | |
| hor_acc | E3 | NO/TM | 0..N | Precision in meters on a horizontal plane, specific content of which is defined in the OMA MLP | string |

When the reception information of the notification message is represented by an "AccessType" element in the "Access" fragment, the area information may be added in the reception information of the notification message as a sub-element of "BroadcastServiceDelivery". A data format of the area information is described in Table 6.

**Table 6**

| Element Name | Type | Mandator y or Not | Occurrenc e Number | Description | Data Type |
|---|---|---|---|---|---|
| AccessType | E1 | NM/TM | 1 | This element defines an access mode and includes the following elements: | AccessType |
| | | | | BroadcastArea (a broadcast area of a notification message) | |
| | | | | BroadcastServiceDelivery (broadcast channel IP delivery indication) | |
| | | | | UnicastServiceDelivery (indicating which server and/or protocol is used to deliver a service on an interaction channel) | |
| BroadcastArea | E2 | NO/TO | 0..1 | This element indicates a broadcast | |
| | | | | area of a notification message. | |
| polarity | A | NO/TO | 0..1 | This element indicates a relationship between a notification message and a target area. | boolean |
| | | | | If polarity = true (default value), it indicates that a relevant area may receive the n1otification message. | |
| | | | | If polarity = false, it indicates that a relevant area may not receive the notification message. | |
| TargetArea | E3 | NO/TM | 0..N | This element specifies target area information, and area information may include the following forms: | |
| | | | | shape | |
| | | | | cc | |
| | | | | name_area | |
| | | | | ZipCode | |
| | | | | CellTargetArea | |
| shape | E4 | NO/TM | 0..1 | Geographic area, a specific format of which is specified by an OMA MLP specification | |
| cc | E4 | NO/TM | 0..1 | Country code, consisting of 1 digit to 3 digits, a specific format of which is specified by an OMA MLP specification | unsignedShort |
| name_area | E4 | NO/TM | 0..N | Geographic area name, for example, Seoul, a specific format of which is specified by an OMA MLP specification | string |
| ZipCode | E4 | NO/TM | 0..1 | Zip code | string |
| CellTargetAre a | E4 | NO/TM | 0..1 | Cell area information | |
| type | A | NM/TM | 1 | Type of cell area information Allowed values are: | unsignedByte |
| | | | | 0: reserved | |
| | | | | 1: 3GPP Cell Global ID, defined in the 3GPP TS 23.003 | |
| | | | | 2: 3GPP Routing Area Identifier (RAI), defined in the 3GPP TS | |
| | | | | 23.0033: 3GPP Location Area Identifier (LAI), defined in the 3GPP TS 23.003 | |
| | | | | 4: 3GPP Service Area Identifier (SAI), defined in the 3GPP TS | |
| | | | | 23.003 | |
| | | | | 5: 3GPP MBMS Service Area Identity (MBMS SAI), defined in the 3GPP TS 23.003 | |
| | | | | 6: 3GPP2 Subnet ID, defined in the 3GPP2 C.S0054-0 | |
| | | | | 7: 3GPP2 SID, defined in the 3GPP2 C.S0005-D | |
| | | | | 8: 3GPP2 SID+NID, defined in the 3GPP2 C.S0005-D | |
| | | | | 9: 3GPP2 SID+NID+PZID, defined in the 3GPP2 C.S0005-D | |
| | | | | 10: 3GPP2 SID+PZID, defined in the 3GPP2 C.S0005-D | |
| | | | | 11: DVB-H Cell ID, defined in the BCAST 10-DVBH-IPDC-Adaptatio n | |
| | | | | 10-127: reserved | |
| | | | | 128-255: private extension | |
| CellArea | E5 | NO/TM | 0..N | Specific cell area information, a type of which is determined by a Type attribute | |
| value | A | NM/TM | 1 | Cell ID | unsignedShort |
| PP2CellID | E6 | NO/TO | 0..N | If type = 4, this element represents a value of Sector_ID, where Sector_ID is defined in the 3GPP2 C.S0024-A. | positiveInteger |
| | | | | If type = 5, 6, 7, or 8, this element represents a value of BASE ID, where BASE ID is defined in the 3GPP2 C.S0002-0. | |
| hor_acc | E3 | NO/TM | 0..N | Precision in meters on a horizontal plane, and the specific content of which is defined in the OMA MLP | string |
| BroadcastServi ceDelivery | E2 | NM/TM | 0..1 | Broadcast channel IP delivery indication, including the following elements: | |
| | | | | BDSType (a type of an access network) | |
| | | | | SessionDescription (session description information used for an access service) | |
| | | | | FileDescription (file description information used for a file transmission session) | |

| For the sake of simplification, other elements unrelated to the embodiment of the present invention are omitted. | | | | | |
|---|---|---|---|---|---|
| UnicastService Delivery | E2 | NM/TM | 0..N | This element indicates which server and/or protocol is used to deliver a service on an interaction channel and includes the following elements: | UnicastServic eDelivery |
| | | | | AccessServerURL (A terminal acquires a server URL of a service through an interaction network.) SessionDescription (session description information of an access service) | |
| UnicastService Delivery | E2 | NM/TM | 0..N | This element indicates which server and/or protocol is used to deliver a service on an interaction channel and includes the following elements: | UnicastServic eDelivery |
| | | | | AccessServerURL (A terminal acquires a server URL of a service through an interaction network.) SessionDescription (session description information of an access service) | |
| For the sake of simplification, other elements unrelated to the embodiment of the present invention are omitted. | | | | | |

When the notification message is represented by the "NotificationReception" element, the area information is added in the notification message as a sub-element of the "NotificationMessage" element. A data format of the area information is described in Table 7.

**Table 7**

| Element Name | Type | Mandatory or Not | Occurrence Number | Description | Data Type |
|---|---|---|---|---|---|
| Notification Message | E | | | Notification message | Notification Message |
| For the sake of simplification, other elements unrelated to the embodiment of the present invention are omitted. | | | | | |
| BroadcastArea | E1 | NO/TO | 0..1 | This element indicates a broadcast area of a notification message. | |
| polarity | A | NO/TO | 0..1 | This element indicates a relationship between a notification message and a target area. | boolean |
| | | | | If polarity = true (default value), it | |
| | | | | indicates that a relevant area may receive the notification message. If polarity = false, it indicates that a relevant area may not receive the notification message. | |
| TargetArea | E2 | NO/TM | 0..N | This element specifies target area information, and area information may include the following forms: | |
| | | | | shape | |
| | | | | cc | |
| | | | | name_area | |
| | | | | ZipCode | |
| | | | | CellTargetArea | |
| shape | E3 | NO/TM | 0..1 | Geographic area, a specific format of which is specified by an OMA MLP specification | |
| cc | E3 | NO/TM | 0..1 | Country code, consisting of 1 digit to 3 digits, a specific format of which is specified by an OMA MLP specification | unsignedShort |
| name_area | E3 | NO/TM | 0..N | Geographic area name, for example, Seoul, a specific format of which is specified by an OMA MLP specification | string |
| ZipCode | E3 | NO/TM | 0..1 | Zip code | string |
| CellTargetArea | E3 | NO/TM | 0..1 | Cell area information | |
| type | A | NM/TM | 1 | Type of cell area information Allowed values are: | unsignedByte |
| | | | | 0: reserved | |
| | | | | 1: 3GPP Cell Global ID, defined in the 3GPP TS 23.003 | |
| | | | | 2: 3GPP Routing Area Identifier (RAI), defined in the 3GPP TS 23.003 | |
| | | | | 3: 3GPP Location Area Identifier (LAI), defined in the 3GPP TS 23.003 | |
| | | | | 4: 3GPP Service Area Identifier (SAI), defined in the 3GPP TS 23.003 | |
| | | | | 5: 3GPP MBMS Service Area Identity (MBMS SAI), defined in the 3GPP TS 23.003 | |
| | | | | 6: 3GPP2 Subnet ID, defined in the | |
| | | | | 3GPP2 C.S0054-0 | |
| | | | | 7: 3GPP2 SID, defined in the 3GPP2 C.S0005-D | |
| | | | | 8: 3GPP2 SID+NID, defined in the 3GPP2 C.S0005-D | |
| | | | | 9: 3GPP2 SID+NID+PZID, defined in the 3GPP2 C.S0005-D | |
| | | | | 10: 3GPP2 SID+PZID, defined in the 3GPP2 C.S0005-D | |
| | | | | 11: DVB-H Cell ID, defined in the BCAST 10-DVBH-IPDC-Adaptation | |
| | | | | 10-127: reserved | |
| | | | | 128-255: private extension | |
| CellArea | E4 | NO/TM | 0..N | Specific cell area information, a type of which is determined by a Type attribute | |
| value | A | NM/TM | 1 | Cell ID | unsignedShort |
| PP2CellID | E5 | NO/TO | 0..N | If type = 4, this element represents a value of Sector_ID, where Sector_ID is defined in 3GPP2 C.S0024-A. | positiveInteger |
| | | | | If type = 5, 6, 7, or 8, this element represents a value of BASE ID, where BASE ID is defined in 3GPP2 C.S0002-0. | |
| hor_acc | E2 | NO/TM | 0..N | Precision in meters on a horizontal plane, specific content of which is defined in the OMA MLP | string |
| For the sake of simplification, other elements unrelated to the embodiment of the present invention are omitted. | | | | | |

Based on the foregoing embodiment, this embodiment provides a method for executing notification message position filtering according to specified time, that is, filtering time of area information is added in reception information and/or a notification message. Specifically, a server adds first time information in reception information, where the first time information is time for instructing a terminal receiving the reception information to compare information of a position where the terminal is located with the first area information and determine whether to receive a notification message according to the reception information according to a comparison result, and the time may be a point of time or a period of time. After receiving the reception information including the first time information and the first area information, the terminal determines whether to receive the notification message according to the reception information according to the first area information in the first time information. That is, the terminal executes comparison filtering of a terminal position and the first area information in the reception information only in the first time information, so that time control on notification message sending is added.

The server may also add second time information in the notification message, where the second time information is time for instructing a terminal receiving the notification message to compare information of a position where the terminal is located with second area information and determine whether to execute an operation corresponding to the notification message according to a comparison result, and the time may be a point of time or a period of time. After receiving the notification message including the second time information and the second area information, the terminal determines whether to execute an operation corresponding to the notification message according to the second area information in the second time information. That is, the terminal executes comparison filtering of the terminal position and the second area information in the notification message only in the second time information, so that time control on notification message sending is added. A format of area information including filtering time information is described in Table 8.

**Table 8**

| Element Name | Type | Mandatory or Not | Occurrence Number | Description | Data Type |
|---|---|---|---|---|---|
| BroadcastArea | E1 | NO/TO | 0..1 | This element indicates a broadcast area of a notification message. | |
| polarity | A | NO/TO | 0..1 | This element indicates a relationship between a notification message and a target area. | boolean |
| | | | | If polarity = true (default value), it indicates that a relevant area may receive the notification message. If polarity = false, it indicates that a relevant area may not receive the notification message. | |
| FilteringTime | A | NO/TO | 0..N | This element indicates time for a terminal to execute filtering. When the time is reached, the terminal acquires a current position of the terminal and compares the current position with a target area to perform position area filtering. | unsignByte |
| TargetArea | E2 | NO/TM | 0..N | This element specifies target area information, and area information may include the following forms: | |
| | | | | shape cc name_area ZipCode CellTargetArea | |
| shape | E3 | NO/TM | 0..1 | Geographic area, a specific format of which is specified by the OMA MLP specification | |
| cc | E3 | NO/TM | 0..1 | Country code, consisting of 1 digit to 3 digits, a specific format of which is specified by the OMA MLP specification | unsignedShort |
| name_area | E3 | NO/TM | 0..N | Geographic area name, for example, Seoul, a specific format of which is specified by the OMA MLP specification | string |
| ZipCode | E3 | NO/TM | 0..1 | Zip code | string |
| CellTargetArea | E3 | NO/TM | 0..1 | Cell area information | |
| type | A | NM/TM | 1 | Type of cell area information Allowed values are: | unsignedByte |
| | | | | 0: reserved | |
| | | | | 1: 3GPP Cell Global ID, defined in 3GPP TS 23.003 | |
| | | | | 2: 3GPP Routing Area Identifier (RAI), defined in the 3GPP TS 23.003 | |
| | | | | 3: 3GPP Location Area Identifier (LAI), defined in the 3GPP TS 23.003 | |
| | | | | 4: 3GPP Service Area Identifier (SAI), defined in the 3GPP TS 23.003 | |
| | | | | 5: 3GPP MBMS Service Area Identity (MBMS SAI), defined in the 3GPP TS 23.003 | |
| | | | | 6: 3GPP2 Subnet ID, defined in the 3GPP2 C.S0054-0 | |
| | | | | 7: 3GPP2 SID, defined in the 3GPP2 C.S0005-D | |
| | | | | 8: 3GPP2 SID+NID, defined in the 3GPP2 C.S0005-D | |
| | | | | 9: 3GPP2 SID+NID+PZID, defined in the 3GPP2 C.S0005-D | |
| | | | | 10: 3GPP2 SID+PZID, defined in the | |
| | | | | 3GPP2 C.S0005-D | |
| | | | | 11: DVB-H Cell ID, defined in the BCAST10-DVBH-IPDC-Adaptation | |
| | | | | 10-127: reserved | |
| | | | | 128-255: private extension | |
| CellArea | E4 | NO/TM | 0..N | Specific cell area information, a type of which is determined by a Type attribute | |
| value | A | NM/TM | 1 | Cell ID | unsignedShort |
| PP2CellID | E5 | NO/TO | 0..N | If type = 4, this element represents a value of Sector_ID, where Sector_ID is defined in the 3GPP2 C.S0024-A. If type = 5, 6, 7, or 8, this element represents a value of BASE ID, where BASE ID is defined in 3GPP2 C.S0002-0. | positiveInteger |
| hor_acc | E2 | NO/TM | 0..N | Precision in meters on a horizontal plane, specific content of which is defined in the OMA MLP | string |

In Table 8, "filteringTime" indicates area position filtering time. After receiving the reception information of the notification message including filtering time and area information, the terminal compares the terminal position with the target area (that is, executes position filtering) in the time indicated by the filtering time. If the terminal is in an area where the notification message needs to be received during filtering, the terminal automatically receives a relevant notification message. If the terminal is not in an area where the notification message needs to be received during filtering, the terminal gives up receiving a relevant notification message. After receiving the notification message including filtering time and area information, the terminal acquires the terminal position and compares the terminal position with the target area (that is, executes position filtering) in the time indicated by the filtering time. If the terminal is in an area where the notification message is applicable, the terminal processes the notification message. If the terminal is in an area where the notification message is inapplicable, the terminal gives up processing the relevant notification message. The filtering time may be represented in various manners, such as starting time and ending time represented in a Network Time Protocol (NTP) format, different time indicated by a flag bit, or time indicated by a show window or a sending window in a "Schedule" fragment in an SG. The manner of adding the time information in the area information provided in this embodiment may be applied to the foregoing embodiments.

Persons skilled in the art should understand that, all or a part of the steps of the method according to the embodiments may be implemented by a program instructing relevant hardware. The program may be stored in a computer readable storage medium. When the program is executed, the steps of the method according to the embodiments are performed. The storage medium may be any medium capable of storing program codes, such as a Read Only Memory (ROM), a Random Access Memory (RAM), a magnetic disk, or an optical disk.

FIG. 7 is a schematic structural diagram of a server according to Embodiment 1 of the present invention. As shown in FIG. 7, the server includes a first processing module 11 and a first sending module 12. The first processing module 11 is configured to add first area information in reception information of a notification message, where the first area information is used to instruct a terminal located in a first area to receive the notification message according to the reception information. The first sending module 12 is configured to send the reception information including the first area information.

Before sending the notification message to the terminal, the server sends the reception information of the notification message to the terminal through an SGDD or an SG, so that the terminal may access a session according to the reception information to acquire a relevant notification message. In order to implement an area division function of the notification message, in this embodiment, the first processing module 11 of the server adds the first area information in the reception information of the notification message, so as to indicate, for the terminal receiving the reception information, that the notification message is only applicable to a terminal located in the first area, that is to say, the notification message is sent to a terminal in a specific area, and a terminal not located in the area may not receive the notification message. After the first processing module 11 generates the reception information including the area information, the first sending module 12 sends the reception information to all terminals. The terminal may determine whether the notification message corresponding to the reception information is applicable to the terminal itself according to the instruction of the first area information.

The server provided in this embodiment adds the area information in the reception information of the notification message. The area information indicates an applicable area of the notification message. Only a terminal in the area needs to receive a relevant notification message, so that a network side is capable of controlling a range of sending the notification message, which thereby relieves the load of a server.

FIG. 8 is a schematic structural diagram of a server according to Embodiment 2 of the present invention. As shown in FIG. 8, the server includes a first processing module 11 and a first sending module 12, and further includes a second processing module 13. The second processing module 13 is configured to add second area information in a notification message, where the second area information is used to instruct a terminal located in a second area to execute an operation corresponding to the notification message. On a basis of the server adding area information in the reception information, the second processing module 13 adds area information in the notification message, and then the first sending module 12 sends the notification message to all terminals. The terminal located in an area range corresponding to the area information in the reception information may determine whether the notification message corresponding to the reception information is applicable to the terminal itself according to the instruction of the second area information and decide whether to execute the operation described in the notification message.

In order to add timeliness of an controllable area, the first processing module 11 of the server provided in this embodiment may also add first time information in the reception information, where the first time information is a point of time or a period of time for instructing a terminal receiving the reception information to compare information of a position where the terminal is located with first area information and determine whether to receive the notification message according to the reception information according to a comparison result. Similarly, the second processing module 13 may also add time information, specifically second time information, in the notification message, where the second time information is a point of time or a period of time for instructing a terminal receiving the notification message to compare the information of the position where the terminal is located with the second area information and determine whether to execute an operation corresponding to the notification message according to a comparison result.

In this embodiment, filtering mechanisms of adding the area information in the reception information and the notification message are combined, so that different areas where the notification message is sent is further divided, and a network side is capable of controlling a range of sending the notification message, which thereby relieves the load of a server.

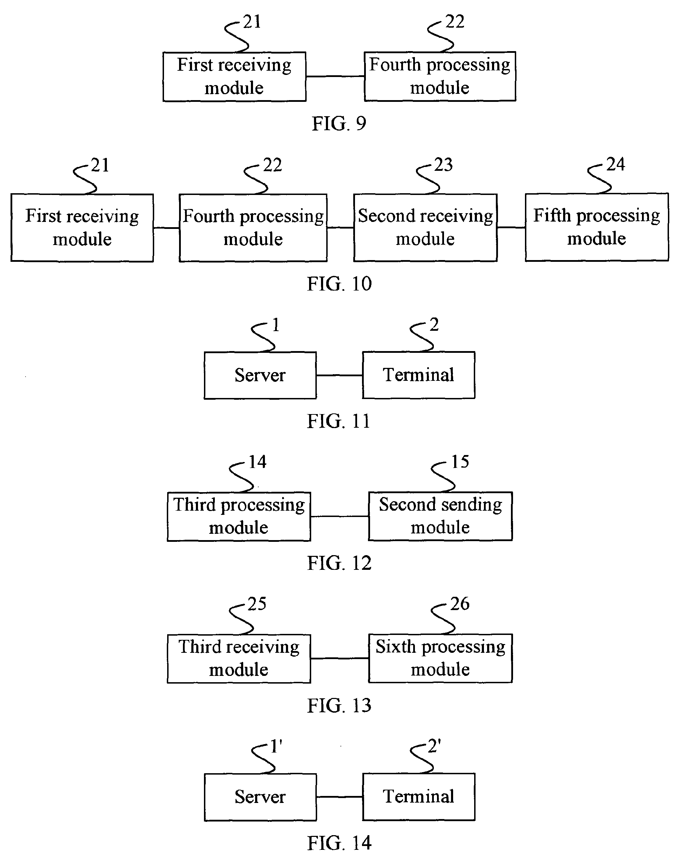

FIG. 9 is a schematic structural diagram of a terminal according to Embodiment 1 of the present invention. As shown in FIG. 9, the terminal includes a first receiving module 21 and a fourth processing module 22. The first receiving module 21 is configured to receive reception information of a notification message, where the reception information includes first area information, and the first area information is used to instruct a terminal located in a first area to receive the notification message according to the reception information. The fourth processing module 22 is configured to determine whether to receive the notification message according to the reception information according to the first area information.

Specifically, the first receiving module 21 of the terminal receives the reception information of the notification message sent by a server, where the reception information includes the first area information. The terminal first obtains information of a position where the terminal is located, and then the fourth processing module 22 compares the position information with the first area information to determine whether to receive the notification message corresponding to the reception information. If the position where the terminal is located is in an area range indicated by the first area information, the terminal needs to receive the corresponding notification message according to the reception information. The reception information includes an interface for accessing a session to send the notification message. For example, the terminal may access the session to acquire a relevant notification message through the interface. If the notification message is delivered through a broadcast channel, the reception information includes an IP multicast address and a port number required to receive the notification message. The terminal accesses a broadcast session according to the instruction of the information to receive the notification message. If the notification message is delivered through an interaction channel, the reception information includes address information, generally a server URL, required to acquire the notification message. The terminal sends a request to the URL to acquire the notification message.

If the first area information does not include the position where the terminal is located, the terminal does not need to receive the notification message. Specifically, after receiving the reception information of the notification message including the area information, the terminal needs to compare a terminal position with the area information, so as to know whether the terminal is in a target area where the notification message needs to be received. For position filtering having a low positioning accuracy requirement, the terminal position may be determined through a cell-id. For position filtering having a high positioning accuracy requirement or a specific format requirement, a dedicated positioning system needs to be used to acquire terminal position information. For example, the terminal position information is acquired through positioning by using a GPS. Alternatively, the terminal position information is acquired following a relevant positioning specification such as the 3GPP, the 3GPP2, or the OMA SUPL. Alternatively, the position information is acquired following some private standards. The terminal may acquire the information of the position where the terminal is located through the prior art.

Before receiving the notification message, the terminal provided in this embodiment may determine whether to receive a relevant notification message according to target area information of the notification message carried in the reception information, which thereby avoids irrelevant processes, relieves the load of a terminal, and saves network resources.

FIG. 10 is a schematic structural diagram of a terminal according to Embodiment 2 of the present invention. As shown in FIG. 10, the terminal includes a first receiving module 21 and a fourth processing module 22, and further includes a second receiving module 23 and a fifth processing module 24. The second receiving module 23 is configured to receive the notification message, where the notification message includes second area information, and the second area information is used to instruct a terminal located in the second area to execute an operation corresponding to the notification message. The fifth processing module 24 is configured to determine whether to execute the operation corresponding to the notification message according to the second area information.

After the fourth processing module 22 of the terminal determines that the notification message needs to be received, the second receiving module 23 receives the notification message according to the reception information, and then the fifth processing module 24 determines whether the notification message is applicable to the terminal itself. The terminal compares information of a position where the terminal is located with the second area information, so as to know whether the terminal is in a target area corresponding to the second area information. If the position where the terminal is located is not in an area range indicated by the second area information, the received notification message is considered to be inapplicable, and the terminal does not execute the operation corresponding to the notification message. If the position where the terminal is located is in the area range indicated by the second area information, the notification message received by the terminal is considered to be applicable, and the terminal executes the operation, such as display of the content of the notification message or update of SG information, corresponding to the content according to the notification message.

If the reception information further includes first time information, where the first time information is a point of time or a period of time for instructing a terminal receiving the reception information to compare the information of the position where the terminal is located with the first area information and determine whether to receive the notification message according to the reception information according to a comparison result. The fourth processing module 22 of the terminal provided in this embodiment is further configured to determine whether to receive the notification message according to the reception information according to the first area information in the first time information.

If the notification message further includes second time information, where the second time information is a point of time or a period of time for instructing the terminal receiving the notification message to compare the information of the position where the terminal is located with the second area information and determine whether to execute an operation corresponding to the notification message according to a comparison result. The fifth processing module 24 of the terminal provided in this embodiment is further configured to determine whether to execute the operation corresponding to the notification message according to the second area information in the second time information.

Before receiving the notification message, the terminal provided in this embodiment may determine whether to receive a relevant notification message according to target area information of sending the notification message carried in the reception information, and may further determine, according to the area information, whether the notification message is applicable in the notification message, which thereby avoids irrelevant processes, relieves the load of a terminal, and saves network resources.

FIG. 11 is a schematic composition diagram of a network system according to Embodiment 1 of the present invention. As shown in FIG. 11, the network system includes a server 1 and a terminal 2. The server 1 is configured to add first area information in reception information of a notification message, where the first area information is used to instruct a terminal located in the first area to receive the notification message according to the reception information, and send the reception information including the first area information. The terminal 2 is configured to receive the reception information and determine whether to receive the notification message according to the reception information according to the first area information.

Furthermore, the server 1 is further configured to add second area information in the notification message, where the second area information is used to instruct a terminal located in the second area to execute an operation corresponding to the notification message, and send the notification message including the second area information. The terminal 2 is further configured to receive the notification message and determine whether to execute the operation corresponding to the notification message according to the second area information.

The server and the terminal involved in the network system provided in this embodiment may adopt the server and the terminal provided in the foregoing embodiments, and are not described here again. Through the network system provided in this embodiment, an area division function of the notification message is implemented at a network side, which thereby avoids irrelevant processes, relieves the load of a server and a terminal, and saves network resources.

FIG. 12 is a schematic structural diagram of a server according to Embodiment 3 of the present invention. As shown in FIG. 12, the server includes a third processing module 14 and a second sending module 15. The third processing module 14 is configured to add second area information in a notification message, where the second area information is used to instruct a terminal located in the second area to execute an operation corresponding to the notification message. The second sending module 15 is configured to send the notification message including the second area information.

The server provided in this embodiment does not add area information in reception information, but the third processing module 14 directly adds the second area information in the notification message, where the second area information is used to instruct a terminal located in the second area to execute the operation, such as, display of the message content or update of SG information, corresponding to the notification message. After the third processing module 14 generates the notification message including the area information, the second sending module 15 of the server sends the notification message to all terminals.

In order to add timeliness to area controllability, the third processing module 14 of the server provided in this embodiment may also add second time information in the notification message, where the second time information is a point of time or a period of time for instructing a terminal receiving the notification message to compare information of a position where the terminal is located with the second area information and determine whether to execute the operation corresponding to the notification message according to a comparison result. The server uses the second time information to indicate specific time for the terminal to execute the operation.

The server provided in this embodiment adds the area information in the notification message, where the area information indicates an applicable area of the notification message, that is, the notification message is only applicable to a terminal in the area, so that a network side is capable of controlling a range of sending the notification message, which thereby relieves the load of a server.

FIG. 13 is a schematic structural diagram of a terminal according to Embodiment 3 of the present invention. As shown in FIG. 13, the terminal includes a third receiving module 25 and a sixth processing module 26. The third receiving module 25 is configured to receive a notification message, where the notification message includes second area information, and the second area information is used to instruct a terminal located in a second area to execute an operation corresponding to the notification message. The sixth processing module 26 is configured to determine whether to execute the operation corresponding to the notification message according to the second area information.

Specifically, the terminal performs initialization and then acquires reception information of the notification message through an SGDD or an "Access" fragment. The terminal receives the notification message through a broadcast channel or an interaction channel according to the instruction of the reception information. In order to implement an area division function of the notification message, a server adds the second area information in the notification message to instruct a terminal located in the second area to decide whether a relevant notification message is applicable to the terminal according to the second area information. The third receiving module 25 of the terminal receives the notification message, and the sixth processing module 26 compares information of a position where the terminal is located with the second area information, so as to know whether the terminal is in a target area corresponding to the second area information. If the position where the terminal is located is not in an area range indicated by the second area information, the received notification message is considered to be inapplicable, and the terminal does not execute the operation corresponding to the notification message. If the position where the terminal is located is in the area range indicated by the second area information, the notification message received by the terminal is considered to be applicable, and the terminal executes the operation, such as parsing of the content of the notification message and display of the content on a screen of the terminal or an update operation on a corresponding service platform according to SG update information, corresponding to the content according to the notification message.

If the notification message further includes second time information, where the second time information is a point of time or a period of time for instructing the terminal receiving the notification message to compare the information of the position where the terminal is located with the second area information and determining whether to execute the operation corresponding to the notification message according to a comparison result, the fifth processing module 26 of the terminal provided in this embodiment is further configured to determine whether to execute the operation corresponding to the notification message according to the second area information in the second time information.

After receiving the notification message, the terminal provided in this embodiment may determine whether the notification message is applicable to the terminal itself according to the second area information carried in the notification message, which thereby avoids irrelevant processes, relieves the load of a terminal, and saves network resources.

FIG. 14 is a schematic composition diagram of a network system according to Embodiment 2 of the present invention. As shown in FIG. 14, the network system includes a server 1' and a terminal 2'. The server 1' is configured to add second area information in a notification message, where the second area information is used to instruct a terminal located in a second area to execute an operation corresponding to the notification message, and send the notification message including the second area information. The terminal 2' is configured to receive the notification message, where the notification message includes the second area information and the second area information is used to instruct the terminal located in the second area to execute the operation corresponding to the notification message, and determine whether to execute the operation corresponding to the notification message according to the second area information.

The server and the terminal involved in the network system provided in this embodiment may adopt the server provided in the embodiment of FIG. 12 and the terminal provided in the embodiment of FIG. 13, and are not described here again. Through the network system provided in this embodiment, an area division function of the notification message is implemented at a network side, which thereby avoids irrelevant processes, relieves the load of a server and a terminal, and saves network resources.

Finally, it should be noted that the foregoing embodiments are merely provided for describing the technical solutions of the present invention, but not intended to limit the present invention. It should be understood by persons skilled in the art that although the present invention has been described in detail with reference to the embodiments, modifications may be made to the technical solutions described in the embodiments, or equivalent replacements may be made to some technical features in the technical solutions, as long as such modifications or replacements do not depart from the concept and scope of the present invention.

## Claims

1. A method for receiving information, comprising:
in a process of sending a notification message, receiving (400), by a terminal, area information indicating a target area of the notification message sent by a server;
wherein the receiving (400), by the terminal, the area information indicating the target area of the notification message sent by the server specifically comprises: receiving, by the terminal, a notification message, the notification message comprises second area information, and the second area information is used to instruct a terminal located in a second area to execute an operation corresponding to the notification message; and
determining, by the terminal, according to the area information, whether to execute a corresponding operation;
wherein the determining, by the terminal, according to the area information, whether to execute the corresponding operation specifically comprises: determining, by the terminal, whether to execute the operation corresponding to the notification message according to the second area information;
wherein the determining, by the terminal, whether to execute the operation corresponding to the notification message according to the second area information comprises: comparing, by the terminal, information of a position where the terminal is located with the second area information; and if the position where the terminal is located is in an area range indicated by the second area information, executing, by the terminal, the operation corresponding to the notification message; and
wherein the notification message further comprises second time information, and the terminal compares the information of the position where the terminal is located with the second area information in time specified by the second time information.

2. A terminal comprising modules for implementing the method of receiving information according to claim 1.

## Patentansprüche

1. Verfahren zum Empfangen von Informationen, umfassend:
Empfangen (400) von Bereichsinformationen durch ein Endgerät in einem Prozess des Sendens einer Benachrichtigungsnachricht, die einen Zielbereich der durch einen Server gesendeten Benachrichtigungsnachricht angeben;
wobei das Empfangen (400) der Bereichsinformationen, die den Zielbereich der durch den Server gesendeten Benachrichtigungsnachricht angeben, durch das Endgerät spezifisch Folgendes umfasst: Empfangen einer Benachrichtigungsnachricht durch das Endgerät, wobei die Benachrichtigungsnachricht zweite Bereichsinformationen umfasst und die zweiten Bereichsinformationen verwendet werden, um ein sich in einem zweiten Bereich befindendes Endgerät anzuweisen, eine der Benachrichtigungsnachricht entsprechende Operation auszuführen; und
Bestimmen durch das Endgerät gemäß den Bereichsinformationen, ob eine entsprechende Operation auszuführen ist;
wobei das Bestimmen durch das Endgerät gemäß den Bereichsinformationen, ob die entsprechende Operation auszuführen ist, spezifisch Folgendes umfasst: Bestimmen durch das Endgerät, ob die der Benachrichtigungsnachricht entsprechende Operation auszuführen ist, gemäß den zweiten Bereichsinformationen;
wobei das Bestimmen durch das Endgerät, ob die der Benachrichtigungsnachricht entsprechende Operation auszuführen ist, gemäß den zweiten Bereichsinformationen Folgendes umfasst: Vergleichen von Informationen von einer Position, an der sich das Endgerät befindet, mit den zweiten Bereichsinformationen durch das Endgerät; und wenn die Position, an der sich das Endgerät befindet, in dem durch die zweiten Bereichsinformationen angegebenen Bereichsumfang liegt, Ausführen der der Benachrichtigungsnachricht entsprechenden Operation durch das Endgerät; und
wobei die Benachrichtigungsnachricht ferner zweite Zeitinformationen umfasst und das Endgerät die Informationen der Position, an der sich das Endgerät befindet, in der durch die zweiten Zeitinformationen spezifizierten Zeit mit den zweiten Bereichsinformationen vergleicht.

2. Endgerät, das Module zur Implementierung des Verfahrens zum Empfangen von Informationen nach Anspruch 1 umfasst.

## Revendications

1. Procédé de réception d'informations, comprenant :
dans un processus d'envoi d'un message de notification, le fait de recevoir (400), au niveau d'un terminal, des informations de zone indiquant une zone cible du message de notification envoyé par un serveur ;
le fait de recevoir (400), au niveau du terminal, des informations de zone indiquant la zone cible du message de notification envoyé par le serveur comprenant spécifiquement : le fait de recevoir, au niveau du terminal, un message de notification, le message de notification comprenant des informations de seconde zone, et les informations de seconde zone étant utilisées pour donner l'instruction à un terminal situé dans une seconde zone d'exécuter une opération correspondant au message de notification ; et le fait de déterminer, au niveau du terminal, en fonction des informations de zone, s'il convient d'exécuter une opération correspondante ;
le fait de déterminer, au niveau du terminal, en fonction des informations de zone, s'il convient d'exécuter l'opération correspondante comprenant spécifiquement : le fait de déterminer, au niveau du terminal, s'il convient d'exécuter l'opération correspondant au message de notification en fonction des informations de seconde zone ;
le fait de déterminer, au niveau du terminal, s'il convient d'exécuter l'opération correspondant au message de notification en fonction des informations de seconde zone comprenant : le fait de comparer, au niveau du terminal, des informations d'une position où se situe le terminal avec les informations de seconde zone ; et, si la position où se situe le terminal se trouve dans un rayon indiqué par les informations de seconde zone, le fait d'exécuter, au niveau du terminal, l'opération correspondant au message de notification ; et
le message de notification comprenant en outre des informations de second temps, et le terminal comparant les informations de la position où se situe le terminal avec les informations de seconde zone en un temps spécifié par les informations de second temps.

2. Terminal comprenant des modules destinés à mettre en oeuvre le procédé de réception d'informations selon la revendication 1.
